# EUROPEAN PATENT APPLICATION

(11) **EP 4 309 482 A1**
(43) Date of publication of application: **24.01.2024**
(21) Application number: 23157872.5
(22) Date of filing: 21.02.2023
(51) Int. Cl.: A01D 34/82, A01D 34/00, A01D 34/64, A01D 75/20, A01D 101/00

(54) **ROBOTIC LAWN TOOL WITH LIFT SENSOR**

(30) Priority: 23.02.2022 US 202263313196 P
(71) Applicant: Techtronic Cordless GP, Anderson, SC 29621 (US)
(72) Inventor: LEE, Hei Man, Kwai Chung (HK); NG, Ho Lam, Kwai Chung (HK)
(74) Representative: Meissner Bolte Partnerschaft mbB

(57) **Abstract**

A robotic garden tool including a body, a plurality of wheels, and a wheel mount extending between and coupled to a corresponding one of the plurality of wheels and the body, where the wheel mount is adjustable between a loaded position and an unloaded position, and where the wheel mount includes a sensor configured to output a signal indicating whether the wheel mount is in the loaded position or the unloaded position. The robotic garden tool also includes a controller in operable communication with the sensor of the wheel mount, and where the controller is configured to adjust the operation of the robotic garden tool based at least in part on the signal output by the sensor of the wheel mount.

## Description

### CROSS-REFERENCE TO RELATED APPLICATION

This application claims priority to co-pending U.S. Provisional Patent Application No. 63/313,196, filed February 23, 2022, the entire contents of which are incorporated herein by reference.

### FIELD OF THE INVENTION

The embodiments described herein related to a robotic lawn tool, and more specifically to a robotic garden tool with a lift sensor.

### BACKGROUND OF THE INVENTION

Robotic and other garden tools may have cutting assemblies that can be safety hazards to users if the user's hands, feet, or limbs come into contact therewith, especially when the user lifts the mower to transport it.

### SUMMARY

In one aspect, a robotic garden tool including a body, a plurality of wheels, a wheel mount extending between and coupled to both a corresponding one of the plurality of wheels and the body, where the wheel mount is adjustable between a loaded position and an unloaded position, and where wheel mount includes a sensor configured to output a signal indicating whether the wheel mount is in the loaded position or the unloaded position, and a controller in operable communication with the sensor of the wheel mount, and where the controller is configured to adjust the operation of the robotic garden tool based at least in part on the signal output by the sensor of the wheel mount.

Alternatively or additionally, in any combination, further including a cutting assembly, and where the cutting assembly includes a blade rotatable relative to the body about a blade axis.

Alternatively or additionally, in any combination, where the robotic garden tool is one of a lawn mower, a robotic trimmer, a robotic fertilizer spreader, a robotic aerator, and a robotic sprinkler.

Alternatively or additionally, in any combination, where the wheel mount includes a first member fixedly coupled to the body, and a second member pivotably movable with respect to the first member, and where at least one wheel of the plurality of wheels is mounted to the second member.

Alternatively or additionally, in any combination, where the sensor of the wheel mount includes a detector fixedly coupled to one of the first member and the second member and a target fixedly coupled to the other of the first member and the second member, and where the detector is configured to detect a distance between the detector and the target.

Alternatively or additionally, in any combination, where the sensor is configured to output a first signal indicating the wheel mount is in the loaded position when the distance between the detector and the target are below a predetermined threshold value, and where the sensor is configured to output a second signal indicating the wheel mount is in an unloaded position when the distance between the detector and the target exceeds the threshold value.

Alternatively or additionally, in any combination, where the detector is a hall effect sensor.

Alternatively or additionally, in any combination, where the wheel mount includes a stop, and where at least a portion of the forces applied to the at least one of the plurality of wheels is transmitted to the first member via the stop when the wheel mount is in the loaded position.

Alternatively or additionally, in any combination, where at least one wheel of the plurality of wheels includes a steerable wheel, and where the steerable wheel is coupled to the body via the wheel mount.

Alternatively or additionally, in any combination, where the steerable wheel includes a caster assembly that is rotatable relative to the wheel mount and a wheel that is rotatable relative to the caster assembly.

Alternatively or additionally, in any combination, where at least one wheel of the plurality of wheels is a driven wheel, and where the controller is configured to adjust the operation of the operation of the driven wheel based at least in part on the signal output by the sensor of the wheel mount.

In another aspect, a modular wheel mount for installation on a body of a tool, the modular wheel mount including a first member, a second member movably coupled to the first member, a wheel rotatably coupled to the second member for rotation about a wheel axis of rotation, a target fixedly coupled to one of the first member and the second member, and a detector fixedly coupled to the other of the first member and the second member, and where the distance between the target and the detector changes as the modular wheel mount is adjusted between a loaded position and an unloaded position.

Alternatively or additionally, in any combination, further including a caster assembly movably coupled to the second member, where the wheel is rotatably mounted to the caster, and where moving the caster assembly relative to the second member causes the wheel axis of rotation to move relative to the second member.

Alternatively or additionally, in any combination, where second member pivots with respect to the first member about a first pivot axis between the loaded position and the unloaded position.

Alternatively or additionally, in any combination, further including a stop coupled to one of the first member and the second member, and where the second member transmits force to the first member via the stop when the modular wheel mount is in the loaded position.

Alternatively or additionally, in any combination, where the second member does not transmit force to the first member via the stop when the modular wheel mount is in the unloaded position.

Alternatively or additionally, in any combination, where the stop at least partially defines the distance between the detector and the target when the modular wheel mount is in the loaded configuration.

Alternatively or additionally, in any combination, where the distance between the detector and the target increases as the modular wheel mount moves from the loaded position to the unloaded position.

Alternatively or additionally, in any combination, where the detector is a hall effect sensor.

Alternatively or additionally, in any combination, where the first member is configured to be fixedly coupled to the body of the tool.

### BRIEF DESCRIPTION OF THE DRAWINGS

FIG. 1 is a plan view of a robotic garden tool positioned within a cutting area encompassed by a barrier.
FIG. 2 is a side view of the garden tool of FIG. 1.
FIG. 3 is a top view of the garden tool of FIG. 1.
FIG. 4 is a bottom perspective view of the garden tool of FIG. 1.
FIG. 5A is a detailed view of the wheel mount 78 of the garden tool of FIG. 1 in the loaded position.
FIG. 5B is a detailed view of the wheel mount 78 of the garden tool of FIG. 1 in the unloaded position.
FIG 6 is a detailed view of another embodiment of the wheel assembly of the garden tool of FIG. 1.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

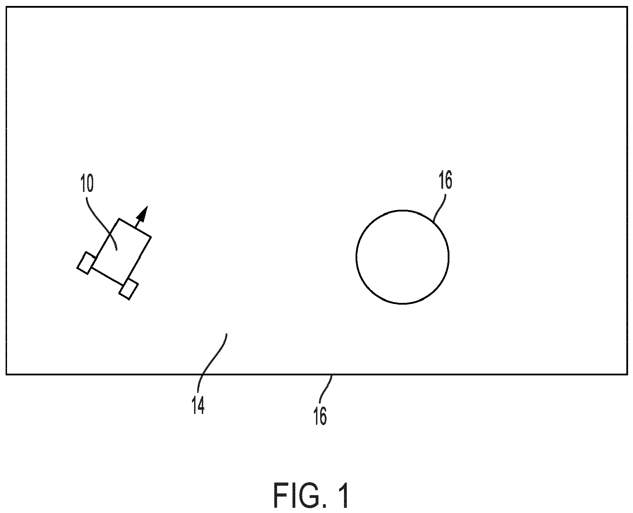

Figures 1-4 illustrate a robotic garden tool 10. More specifically, the garden tool 10 is a lawn mower for use to cut vegetation such as grass in an enclosed cutting area 14. The cutting area 14 generally includes, but is not limited to, a continuous area of grass or other vegetation that is enclosed by one or more barriers 16. In the illustrated embodiment, the barriers 16 include a series of electrified wires enclosing the cutting area 14 while in alternative embodiments different form of barrier may be used such as, but not limited to, walls, pavers, GPS data points, virtual walls, and the like. As shown in FIG. 1, such barriers 16 may be used to enclose the overall cutting area 14 and/or to segregate one or more interior regions from the cutting area 14. While the illustrated garden tool 10 is a lawn mower, it is understood that in alternative embodiments the garden tool 10 may include, but is not limited to a robot trimmer, a robotic fertilizer spreader, a robotic aerator, a robotic sprinkler, and the like.

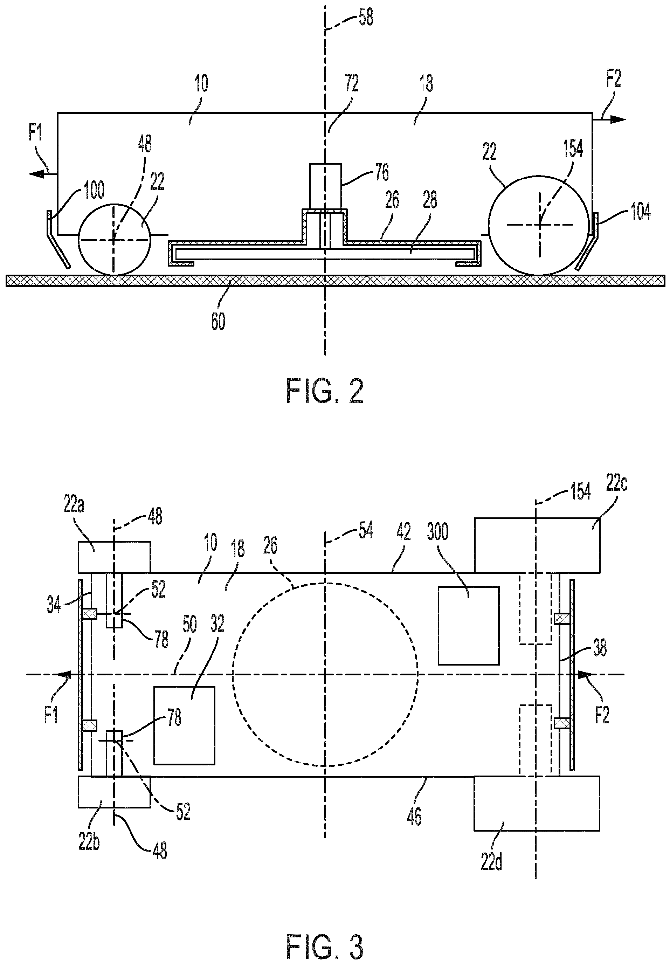

As shown in FIGS. 2-4, the garden tool 10 is an electrically powered, self-propelled device that includes a body 18, a plurality of wheels 22 rotatably mounted to the body 18, a cutting assembly 26, one or more bump sensors 100, 104, a controller 30, and a battery 32. The body 18, in turn, includes a front or first end 34, a rear or second end 38 opposite the first end 34, a right or first side 42, and a left or second side 46 opposite the first side 42. The body 18 also defines a longitudinal axis 50 extending along the length of the body 18 and centered between the first side 42 and the second side 46 (e.g., passing through both the first and second ends 34, 38). The body 18 also defines a lateral axis 54 extending along the width of the body 18 and centered between the first and second ends 34, 38 (e.g., passing through both the first and second sides 42, 46). The body 18 also defines a central axis 58 generally positioned at the intersection of the longitudinal and lateral axes 50, 54 and oriented perpendicular to both (e.g., in a generally vertical orientation).

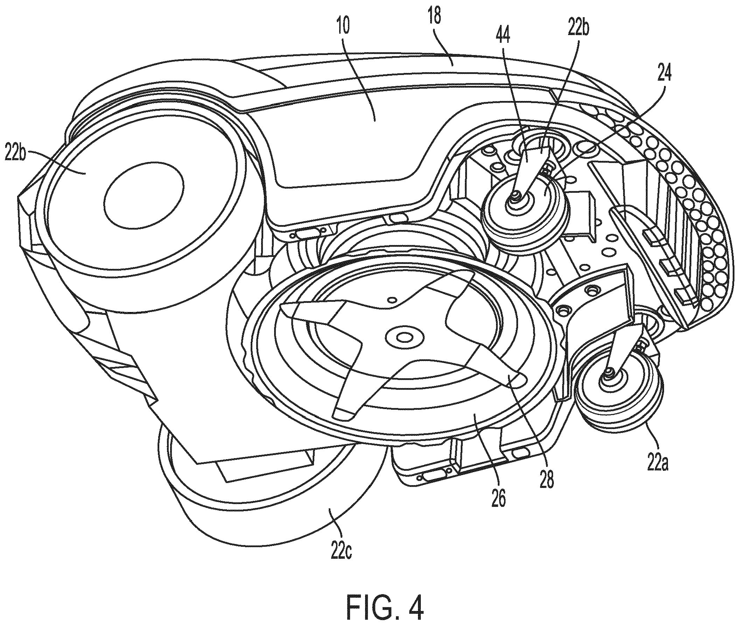

As shown in FIGS. 3 and 4, the garden tool 10 includes four wheels 22a, 22b, 22c, 22d, each rotatably coupled to the body 18 and configured to support the garden tool 10 for self-driven movement along a support surface 60 (e.g., the surface of the cutting area 14). In the illustrated embodiment, the wheels 22a, 22b, 22c, 22d include two steerable, undriven wheels 22a, 22b proximate the first end 34 and two non-steerable, driven wheels 22c, 22d proximate the second end 38. However, in alternative embodiments, all or any sub-set of the wheels 22 may be driven and all or any sub-set of the wheels 22 may be steerable. Furthermore, while the illustrated steerable wheels are passive in nature (e.g., a caster-style wheel), it is understood that in alternative embodiments the steerable wheels 22a, 22b may be actively driven by the controller 30. In still other embodiments, the garden tool 10 may include more or fewer wheels 22 positioned in different arrangements about the garden tool 10. In still other embodiments, the wheels 22 may be replaced by other forms of propulsion such as, but not limited to, tracks, omni-wheels, walking legs, and the like.

As shown in FIGS. 3-5B, the steerable wheels 22a, 22b include a wheel 24 and a caster assembly 44 supporting the wheel 24. During use, the wheel 24 is configured to rotate about a substantially horizontal wheel axis 48 which can, in turn, be re-oriented relative to the body 18 of the garden tool 10 by rotating the caster assembly 44 about the caster axis 52. In the illustrated embodiment, the wheel axis 48 is horizontally oriented while the caster axis 52 is vertically oriented.

As shown in FIGS. 2-4, the cutting assembly 26 of the garden tool 10 includes a blade 28 mounted for rotation relative to the body 18 about a blade axis 72. More specifically, the blade 28 is mounted to a dedicated blade motor 76 which rotates the blade 28 during use. In the illustrated embodiment, the blade axis 72 is oriented vertically (e.g., parallel to the central axis 58) and positioned proximate the center of the body 18. In some embodiments, the blade axis 72 may be coincident with the central axis 58.

During use, the blade 28 is mounted to the body 18 of the garden tool 10 such that it is able to cut vegetation while the garden tool 10 is traveling in either a first or forward direction F1 (e.g., toward the first end 34) or traveling in a second or rearward direction F2 opposite the forward direction F1 (e.g., toward the second end 38).

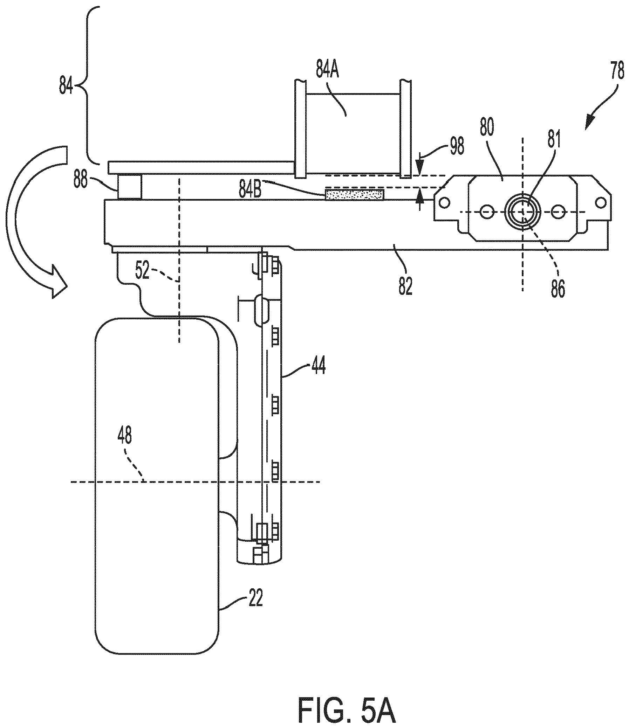

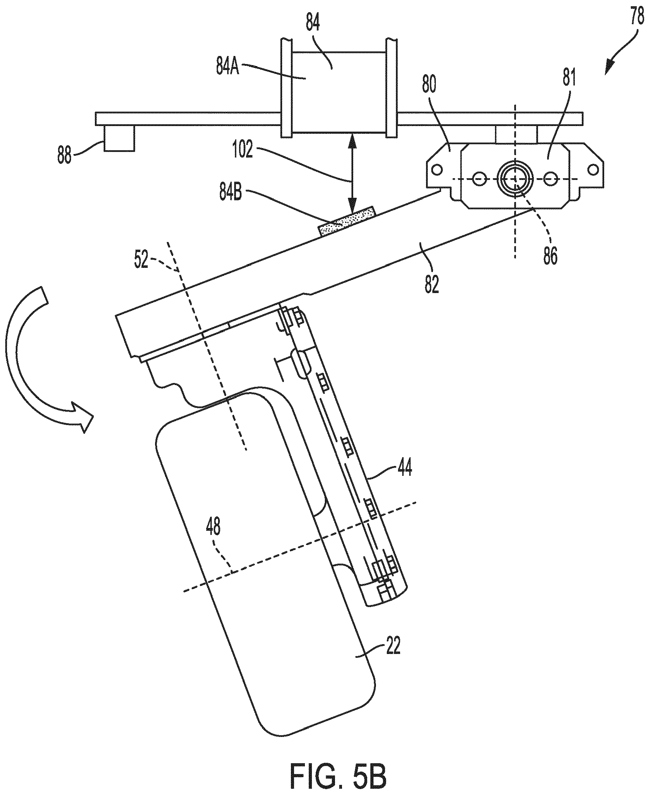

Turning to FIGS. 5A and 5B, the garden tool 10 also includes a pair of wheel mounts 78 each extending between and coupling a corresponding one of the wheels 22 to the body 18. More specifically, the wheel mounts 78 are configured to couple the non-driven steerable wheels 22a, 22b to the body 18. Each wheel mount 78 includes a first or fixed member 80 having a pivot 81 defining a pivot axis 86, and a second or movable member 82 pivotably coupled to the fixed member 80 for rotation about the pivot axis 86. While the illustrated embodiment only depicts the wheel mounts 78 as being used for the steerable wheels 22a, 22b, it is understood that in alternative embodiments the wheel mounts 78 may also be used with the rear driven wheels 22c, 22d.

When installed on the tool 10, the fixed member 80 of each wheel mount 78 is fixedly coupled to the body 18 of the garden tool 10 while the corresponding wheel 22a, 22b is coupled to the movable member 82 opposite the pivot axis 86 (e.g., the caster assembly 44 of the corresponding steerable wheel 22a, 22b is coupled to the movable member 82). As such, pivoting the movable member 82 relative to the fixed member 80 causes both the caster assembly 44 and the wheel 24 of the corresponding steerable wheel 22a, 22b to move, as a unit, relative to the frame body 18. More specifically, each wheel mount 78 is rotatable between a loaded position (see FIG. 5A), in which the corresponding wheel 22a, 22b is under load and supporting the weight of the body 18 of the garden tool 10, and an unloaded position (see FIG. 5B), in which the corresponding wheel 22a, 22b is not under load and not supporting the weight of the garden tool 10. Furthermore, each mount 78 of the garden tool 10 is operable independent of each other. As such, each wheel 22a, 22b moves between the loaded position and the unloaded position based upon the magnitude of load being applied to that specific wheel 22a, 22b and is not dependent upon the load applied to any other wheel.

In the illustrated embodiment, the fixed member 80 includes a stop 88 against which the movable member 82 rests when in the loaded position. As such, the weight of the tool 10 is transmitted from the support surface 60, through the wheel 22a, 22b, through the pivoting member 82, and into the stop 88. The stop also serves to at least partially define the distance between the detector 84A and the target 84B when the mount 78 is in the loaded position (e.g., together with the pivot axis 86). In other embodiments, the stop 88 may be incorporated into the sensor 84 (discussed below) or into the pivot 81. While not shown, the fixed member 80 may also include a second stop that the movable member 82 may engage when completely unloaded. In such embodiments, the second stop is generally used to limit the rotational range of the movable member 82 so the wheel 22a, 22b does not over-rotate out of position when not under load.

The pivot axis 86 of each wheel mount 78 is oriented parallel to the longitudinal axis 50 and located inward (e.g., closer to the longitudinal axis 50) from the corresponding wheel 22a, 22b. As such, when the corresponding wheel 22a, 22b is unloaded it will pivot downwardly and inwardly (e.g., toward the longitudinal axis 50) and away from the stop 88. This location of the pivot axis 86 allows the garden tool 10 to have a shortened height, which may be beneficial.

Each wheel mount 78 is also outfitted with a lift sensor 84 configured to detect the location of the movable member 82 relative to the fixed member 80 and output signals to the controller 30 representative of the same. More specifically, the lift sensor 84 includes a first element or detector 84A and a second element or target 84B. During use, the detector 84A is configured to detect the distance between the detector 84A and the target 84B and output a signal to a controller 30 when the distance exceeds a pre-determined threshold value. In the illustrated embodiment, the detector 84A is located in a fixed position relative to the fixed member 80 of the tool 10 while the target 84 is coupled to and moves together with the movable member 82. However, in alternative embodiments the layout can be reversed.

As shown in FIG. 5A and 5B, the target 84B is a first predetermined target distance 98 from the sensor 84A when the wheel mount 78 is in the loaded position (see FIG. 5A) and a second predetermined target distance 102 from the sensor 84A, greater than the first predetermined target distance 98, when the wheel mount 78 is in the unloaded position (see FIG. 5B). Generally speaking, the target distance increases as the mount 78 moves out of the loaded position and toward the unloaded position.

In the illustrated embodiment, the detector 84A and target 84B include a hall effect sensor and a magnet, respectively. In the hall effect sensor embodiment, the hall sensor (e.g., the detector element 84A) measures the magnetic field established by the magnet or target 84B, which changes based on the distance between the hall sensor and the magnet. Once the strength of the magnetic field experienced by the hall sensor (e.g., top element 84A) falls below a predetermined value, the lift sensor 84 outputs a signal to the controller 30 indicating that the wheels 22a, 22b have become unloaded (e.g., that the movable member 82 is no longer in the loaded position). However, in alternative embodiments, other forms of detectors 84, such as proximity sensors, rheostats, and the like may be used. In some embodiments, the sensor 84 may be able to output a signal representative of the exact distance between the detector 84A and the target 84B such that the controller 30 can calculate the angle at which the movable member 82 is positioned at any given period of time. In still other embodiments, the detector 84 may only be capable of binary outputs whereby the sensor is activated when the target distance exceeds a pre-determined value and deactivated when the target distance is less than the pre-determined value. In other embodiments, the sensor may be activated when the target distance is less than the pre-determined value and deactivated when the target distance exceeds the predetermined value. Other types of detectors 84 that may be used include, but are not limited to, a pressure switch, a contact switch, a microswitch, electrical contacts, and the like. In different embodiments, other sensors, (e.g., switch sensor, analog sensor or measurement sensor) may also be used to detect if and to what extent the garden tool 10 is lifted (e.g., as the wheel is unloaded). Furthermore, while the illustrated sensor 84 is described as outputting a signal upon detecting that a corresponding wheel has become unloaded, it is also understood that in alternative embodiments outputting a signal may include ceasing the output of a predetermined signal that is output when the wheel is loaded.

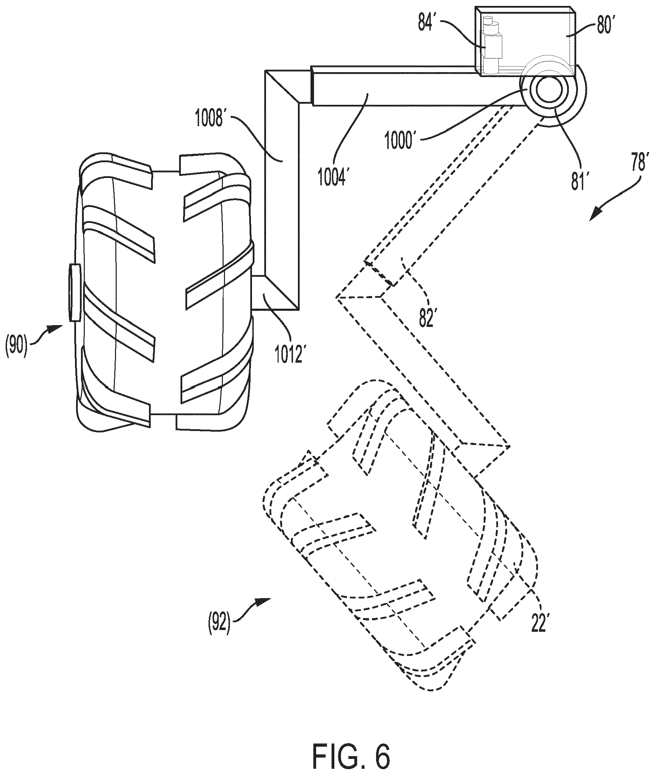

As shown in FIGS. 5 and 6, the wheel mount 78 is a modular unit configured to be detached and attached to the body 18 of the tool 10 as a single, self-contained unit. More specifically, the fixed member 80, the pivot 81, the detector 84A element of the sensor 84, and the stop 88 are all interconnected as a single unit so that they can be removed from and coupled to the body 18 together. By doing so, the relative positions between these elements are maintained relative to each other and to the movable member 82 when the wheel mount 78 is detached from and attached to the body 18. This avoids unnecessary tolerance stack-up between the elements and allows the wheel mount 78 to be maintained and/or replaced with little to no calibration required. As stated above, each wheel mount 78 is independent from each other wheel mount 78 so that the wheel mount 78 can be attached to and detached from the tool 10 individually without effecting the operation or calibration of the remaining wheel mounts 78.

During mowing operations, the garden tool 10 generally rests on or otherwise travels across the support surface 60 of the cutting area 14. When doing so, both mounts 78 are in the loaded position as a portion of the weight of the garden tool 10 is acting upon both front wheels 22a, 22b, loading them, and forcing both mounts 78 into the loaded position (see FIG. 5A). More specifically, the mower's weight is applied vertically downwardly on the fixed member 80 of each mount 78 (e.g., the pivot 81) which results in an equal and opposite force being applied by the support surface 60 into the wheels 22a, 22b. This, in turn, forces the movable members 82 to rotate about their corresponding pivot axes 86 and into engagement with their corresponding stops 88 to support the load. With both mounts 78 in the loaded position, the tool 10 may then travel across or otherwise rest on the support surface 60 and the wheels 24 can be re-oriented relative to the movable members 82 via the caster assemblies 44 to allow for turning without having the mounts 78 leave the loaded position.

In instances where a user or third party attempts to lift or otherwise attempts to pickup the tool 10 and expose the cutting assembly 26 underneath, the loading forces (e.g., the weight of the tool 10) are removed from the front wheels 22a, 22b causing both mounts 78 to independently begin pivoting away from the loaded position and toward the unloaded position. By doing so, the target distance between the sensor 84A and the target 84B of the sensor 84 begins to increase. Once the target distance exceeds the predetermined threshold, the sensor 84 outputs a signal to the controller 30 indicating that the wheels 22a, 22b are no longer in the loaded position, as described above.

In other instances, a single wheel 22a, 22b may become unloaded when the tool 10 drives over some sort of depression or extreme height differential in the support surface 60 (e.g., a cliff, a waterfront, a hole, a ledge, and the like). In such instances, when the corresponding wheel 22a, 22b breaks the threshold of the depression the loading forces are removed therefrom. As described above, the removal of the loading forces from the wheel 22a, 22b causes the wheel to pivot toward the unloaded position causing the target distance to increase. Once the target distance exceeds the predetermined threshold, the sensor 84 outputs a signal to the controller 30 indicating that the wheel 22a, 22b is no longer in the loaded position, as described above.

Once the controller 30 receives the signal from one or both sensors 84 that the wheels 22a, 22b are no longer in the loaded position, one or more safety features may be activated by the controller 30 to render the potentially exposed cutting assembly 26 and the tool 10 more safe. Such safety features may include, but are not limited to, slowing or stopping the blade 28, stopping or pausing the current mowing program, outputting an audible or visual signal, outputting an error or alert to a user device, or any combination thereof. Generally speaking, the safety features are intended to protect user and others by stopping the rotation of the blade 28 as it is potentially exposed and accessible by the user once the front wheels 22a, 22b have left the ground. In instances where only one wheel 22a, 22b is unloaded, the safety feature may include driving the tool 10 away from the unloaded wheel (e.g., away from the cliff or other form of depression). In still other embodiments where more than one independent wheel mount 78 is present, the combination of loaded and unloaded wheels may be interpreted by the controller 30 as a form of tilt sensor to detect when the tool 10 is being tiled and which side of the tool 10 is being lifted from the ground.

In instances where the front wheels 22a, 22b are subsequently returned to the support surface 60 (e.g., the tool 10 is placed on the ground), the above-described forces are returned to the mounts 78 causing them to pivot back into the loaded positions (see FIG. 5A). Upon reaching the loaded positions, both sensors 84 are configured to output a signal to the controller 30 indicating the same. In other embodiments, the sensors 84 may stop outputting the earlier signal indicating the wheels 22a, 22b are unloaded. With the wheels 22a, 22b back in their safe, loaded positions, the one or more safety features may be disabled by the controller 30 and tool returned to standard mowing operations.

FIG. 6 shows another embodiment of the wheel mount 78'. The wheel mount 78' is substantially similar to the wheel mount 78 and therefore only the differences will be discussed in detail herein. FIG. 6 illustrates the wheel mount 78' overlayed in both the loaded 90 and unloaded 92 positions. The movable member 82' of the wheel mount 78' includes an elongated member forming a "Z" shape. More specifically, the movable member 82' includes a first end 1000' defining a pivot point, a first portion 1004' extending from the first end 1000', a second portion 1008' extending perpendicular to the first portion 1004', and a third portion 1012' extending perpendicular from the second portion 1008' opposite the first portion 1004'. When assembled, the third portion 1012' serves as an axle for the wheel 22' which is rotatably mounted thereon. Together, the size and shape of the movable member 82' serves to position the wheel vertically below and laterally outside the pivot point, allowing for a wider and lower stance without the need of a separate caster assembly.

Other features and aspects of the invention will become apparent by consideration of the following detailed description and accompanying drawings.

## Claims

1. A robotic garden tool comprising:
a body;
a plurality of wheels;
a wheel mount extending between and coupled to both a corresponding one of the plurality of wheels and the body, wherein the wheel mount is adjustable between a loaded position and an unloaded position, and wherein wheel mount includes a sensor configured to output a signal indicating whether the wheel mount is in the loaded position or the unloaded position; and
a controller in operable communication with the sensor of the wheel mount, and wherein the controller is configured to adjust the operation of the robotic garden tool based at least in part on the signal output by the sensor of the wheel mount.

2. The robotic garden tool of claim 1, further comprising a cutting assembly, and wherein the cutting assembly includes a blade rotatable relative to the body about a blade axis.

3. The robotic garden tool of claim 1, wherein the robotic garden tool is one of a lawn mower, a robotic trimmer, a robotic fertilizer spreader, a robotic aerator, and a robotic sprinkler.

4. The robotic garden tool of claim 1, wherein the wheel mount includes a first member fixedly coupled to the body, and a second member pivotably movable with respect to the first member, and wherein at least one wheel of the plurality of wheels is mounted to the second member.

5. The robotic garden tool of claim 4, wherein the sensor of the wheel mount includes a detector fixedly coupled to one of the first member and the second member and a target fixedly coupled to the other of the first member and the second member, and wherein the detector is configured to detect a distance between the detector and the target.

6. The robotic garden tool of claim 5, wherein the sensor is configured to output a first signal indicating the wheel mount is in the loaded position when the distance between the detector and the target are below a predetermined threshold value, and wherein the sensor is configured to output a second signal indicating the wheel mount is in an unloaded position when the distance between the detector and the target exceeds the threshold value.

7. The robotic garden tool of claim 5, wherein the detector is a hall effect sensor.

8. The robotic garden tool of claim 4, wherein the wheel mount includes a stop, and wherein at least a portion of the forces applied to the at least one of the plurality of wheels is transmitted to the first member via the stop when the wheel mount is in the loaded position.

9. The robotic garden tool of claim 1, wherein at least one wheel of the plurality of wheels includes a steerable wheel, and wherein the steerable wheel is coupled to the body via the wheel mount.

10. The robotic garden tool of claim 9, wherein the steerable wheel includes a caster assembly that is rotatable relative to the wheel mount and a wheel that is rotatable relative to the caster assembly.

11. The robotic garden tool of claim 1, wherein at least one wheel of the plurality of wheels is a driven wheel, and wherein the controller is configured to adjust the operation of the operation of the driven wheel based at least in part on the signal output by the sensor of the wheel mount.

12. A modular wheel mount for installation on a body of a tool, the modular wheel mount comprising:
a first member;
a second member movably coupled to the first member;
a wheel rotatably coupled to the second member for rotation about a wheel axis of rotation;
a target fixedly coupled to one of the first member and the second member; and
a detector fixedly coupled to the other of the first member and the second member, and wherein the distance between the target and the detector changes as the modular wheel mount is adjusted between a loaded position and an unloaded position.

13. The modular wheel mount of claim 12, further comprising:
a caster assembly movably coupled to the second member, wherein the wheel is rotatably mounted to the caster, and wherein moving the caster assembly relative to the second member causes the wheel axis of rotation to move relative to the second member.

14. The modular wheel mount of claim 12, wherein second member pivots with respect to the first member about a first pivot axis between the loaded position and the unloaded position.

15. The modular wheel mount of claim 12, further comprising a stop coupled to one of the first member and the second member, and wherein the second member transmits force to the first member via the stop when the modular wheel mount is in the loaded position.

16. The modular wheel mount of claim 15, wherein the second member does not transmit force to the first member via the stop when the modular wheel mount is in the unloaded position.

17. The modular wheel mount of claim 15, wherein the stop at least partially defines the distance between the detector and the target when the modular wheel mount is in the loaded configuration.

18. The modular wheel mount of claim 12, wherein the distance between the detector and the target increases as the modular wheel mount moves from the loaded position to the unloaded position.

19. The modular wheel mount of claim 12, wherein the detector is a hall effect sensor.

20. The modular wheel mount of claim 12, wherein the first member is configured to be fixedly coupled to the body of the tool.
